# EUROPEAN PATENT SPECIFICATION

(11) **EP 1 311 596 B1**
(45) Date of publication and mention of the grant of the patent: **21.06.2006**
(21) Application number: 01984331.7
(22) Date of filing: 23.07.2001
(51) Int. Cl.: C08J 9/00, B29B 7/76

(54) **METHOD AND APPARATUS FOR MANUFACTURING PHENOLIC FOAMS BY IMPINGEMENT MIXING**
VERFAHREN UND APPARAT ZUR HERSTELLUNG VON PHENOLSCHÄUME DURCH VERMISCHUNG DER KOMPONENTE IN EINER PRALLSTRÖMUNG
PROCEDE ET APPAREIL PERMETTANT DE FABRIQUER DES MOUSSES PHENOLIQUES PAR MELANGE PAR INERTIE

(30) Priority: 21.07.2000 EP 00650086; 01.02.2001 IE 010085
(43) Date of publication of application: 21.05.2003
(73) Proprietor: Kingspan Research and Developments Limited, Kingscourt, County Cavan (IE)
(72) Inventor: DAVIES, Gwyn. Kingspan Res. & Developments Ltd., Kingscourt, County Cavan (IE); FLETCHER, Trevor, Kingspan Res. & Development Ltd., Kingscourt, County Cavan (IE); TOTTEY, John, Kingspan Res. & Developments Ltd., Kingscourt, County Cavan (IE); McDONALD, Patrick, Kingspan Res. & Development Ltd, Kingscourt, County Cavan (IE)
(74) Representative: O'Brien, John Augustine
(86) International application number: PCT/IE2001/000096
(87) International publication number: WO 2002/008319

(56) References cited:
- DE-A- 19 706 030

## Description

The invention relates to a method and an apparatus for manufacturing a phenolic insulating body.

Conventionally, a phenolic insulating foam reactant mixture is formed by the reaction of a phenolic resin and a strong acid such as sulphuric acid. One of the problems is that the acid is extremely corrosive which leads to serious processing problems in forming the reactant mixture.

Phenolic resins are traditionally mixed using low pressure mixers that are large and bulky. This type of mixer tends to block up relatively quickly due to reaction between the resin and acid. There is a need for a mixer that is relatively lightweight and free of problems with blockages.

Historically, a number of attempts have been made to develop a conventional high pressure mixer for phenolic foam systems. These systems comprise of a high pressure resin stream and a high pressure acid stream. These developments have failed due to the corrosive nature of the acid with respect to the very tight engineering tolerances needed for the conventional systems to work. Furthermore, the incompatibility in viscosity between the viscous phenolic resin and low viscosity acid results in poor mixing. The health and safety issues surrounding the use of acid at very high pressure also make this design undesirable.

This invention is directed towards providing a method and apparatus for manufacturing a phenolic insulating material which will overcome these problems.

### Statements of Invention

According to the invention there is provided a method for manufacturing an insulating body comprising the step of high pressure impingement mixing of a high pressure liquid phenolic resin stream at a pressure of at least 100 bar and a low pressure stream at a pressure of less than 20 bar to form a phenolic insulating foam reactant mixture. The low pressure stream preferably comprises an acid stream. A blowing agent stream may be introduced through a low pressure port.

In a preferred embodiment the phenolic resin stream is at a pressure of at least 125 bar, preferably greater than 140 bar, ideally greater than 170 bar, and ideally at a pressure of from 170 to 190 bar.

In a preferred embodiment the low pressure stream is at a pressure of less than 10 bar, and ideally from 3 to 10 bar. Ideally, the low pressure stream is drawn into the phenolic resin stream through an orifice.

In a preferred embodiment the method comprises the step of splitting the phenolic resin stream into at least two streams which are directed towards one another and the low pressure stream is drawn in between the high pressure streams.

In one embodiment the method comprises the step of aerating the mixture, preferably by introducing an air stream for mixing with the high pressure liquid phenolic resin stream and the low pressure stream.

Preferably the air stream is introduced during impingement mixing of the high pressure liquid phenolic resin stream and the low pressure stream. Preferably the air stream is at a pressure of from 3 to 8 bar. Typically the air flow rate is 50 to 150 cc/min. at 6 bar pressure.

In one aspect the method comprises the steps of: -
laying down the liquid phenolic foam reactants onto a first substrate;
applying a second substrate over the liquid foam reactants; and
heating the substrates and the reactants to allow the phenolic foam reactants to expand and form an insulating core between the substrates.

In one aspect the invention provides a method for manufacturing an insulating panel comprising the steps of: -
conveying a first substrate continuously along a flat bed;
forming a liquid phenolic foam reactant stream by a method of the invention;
laying down the liquid phenolic foam reactants onto the first substrate;
leading a second substrate continuously over the liquid insulating foam reactants;
heating the substrates and the phenolic foam reactants to expand the reactants and form an insulating core between the substrates.

In a preferred embodiment the liquid phenolic foam reactants are laid onto the substrate through a lay down poker. In this case preferably the method includes the step of moving the lay down poker relative to the substrate.

In one embodiment at least one of the substrates is a flexible substrate.

At least one of the substrates may be a non-flexible substrate such as a metal skin.

In a further aspect the invention provides a method for manufacturing an insulating panel comprising the steps of:-
introducing a phenolic resin stream into an impingement mixing head, and simultaneously introducing a low pressure stream into the phenolic resin stream at a low pressure of less than 20 bar relative to the high pressure of at least 100 bar of the phenolic resin stream;
laying down the liquid phenolic insulating foam reactant mixture thus formed onto a substrate; and
heating the reactant mixture in an oven to allow the phenolic foam reactants to expand to form an insulating core.

The low pressure stream preferably comprises an acid stream. In another embodiment of the invention the low pressure stream comprises a blowing agent stream.

In a preferred embodiment the method comprises introducing an air stream into the impingement mixing head during introduction of the phenolic resin stream and the low pressure stream.

In another aspect the invention provides phenolic insulating foam reactant forming apparatus comprising an impingement mixing head for forming a phenolic insulating foam reactant mixture comprising at least one high pressure inlet for a phenolic resin stream at a pressure of at least 100 bar and a low pressure inlet through which a low pressure stream at less than 20 bar such as acid and/or a blowing agent is drawn for impingement mixing with the phenolic stream. Preferably the mixing head comprises at least two high pressure inlets which are directed towards one another. There may be two low pressure inlets.

In a preferred embodiment the apparatus comprises an air inlet for introducing pressurised air into the impingement mixing head during mixing of a phenolic resin stream and a low pressure stream.

### Brief Description of Drawings

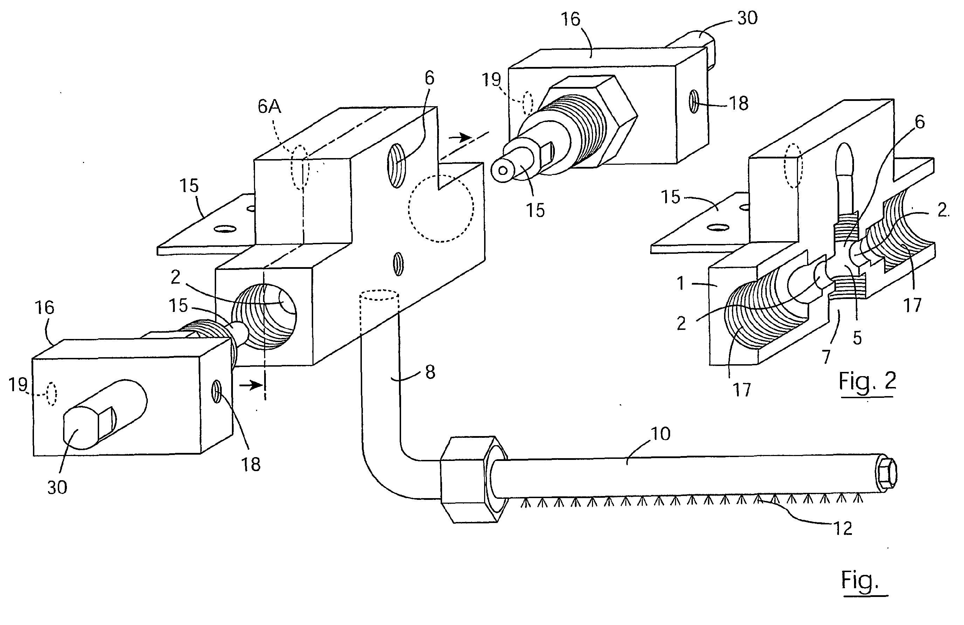

The invention will be more clearly understood from the following description thereof given by way of example only in which:-
Fig. 1 is a perspective, partially exploded view of a mixing head used in the invention;
Fig. 2 is a cut-away view of the mixing head of Fig. 1,
Fig. 3 is a side view of the mixing head,
Fig 4 is a plan view of the mixing head;
Fig 5 is a cross sectional view of the mixing head; and
Fig. 6 are views of a grub screw used in the mixing head.

### Detailed Description

The invention provides a method for manufacturing an insulating body such as an insulating panel in which a high pressure phenolic resin stream is impingement mixed with a low pressure stream to form a phenolic insulating foam reactant mixture.

Referring to the drawings there is illustrated a mixing head 1 used in the invention. The mixing head 1 is typically a stainless steel block having a first high pressure inlet port 2 and a second high pressure inlet port 3 which are oppositely directed. Both ports 2, 3 are connected to a phenolic resin stream at a pressure of at least 100 bar, preferably at least 125 bar, preferably greater than 140 bar, ideally from 170 to 190 bar, typically 180 bar. Thus, two streams of a phenolic resin at a high pressure are directed towards one another and impinge against one another in an impingement mixing chamber 5 in the mixing head.

The mixing head 1 has a low pressure inlet port 6 which is connected to a low pressure stream at a low pressure of less than 20 bar, preferably less than 10 bar, ideally from 3 to 10 bar and typically about 5 bar. The inlet port 6 is perpendicular to the phenolic resin parts 2, 3 and the low pressure stream is drawn into the chamber 5 and is impingement mixed with the high pressure phenolic resin streams. The phenolic insulating foam reactant mixture exits from the mixing chamber through an outlet 7.

The outlet 7 is in this case connected by an elbow section 8 to an elongate lay-down poker 10 having a plurality of axially spaced-apart downwardly directed outlet holes through which streams 12 of liquid foam reactants exit. Typically the poker 10 is moved transversely across a substrate as the substrate is continuously moved along underneath the poker 10 to achieve an even spread of the phenolic reactants across the length and width of the substrate. A mounting bracket 15 fixed to the mixing head 1 is mounted to a traversing carriage which moves the poker 11 back and forth across the substrate.

In this case the mixing head comprises a pressurised air inlet port 20 through which pressurised air is introduced at a pressure of 3 to 8 bar. Typically the air flow is 50 to 150 cc/min. at 6 bar. Such an air stream aerates the mixture and improves foam quality.

It is also envisaged that the mixture may be aerated by, for example, use of an in-line aeration device, or vigorous mixing in the holding tank. However, we have found it most convenient and effective to introduce pressurised air into the mixing chamber.

The low pressure stream ideally comprises an acid stream. The low pressure stream may also comprise a blowing agent stream which may be introduced through a separate inlet and may be premixed with the acid before contacting the high pressure stream. The introduction of the blowing agent in this way provides improved control of the foaming process and facilitates adjustment during production. It may also contribute to improved foam quality as evidenced by fine cell structure.

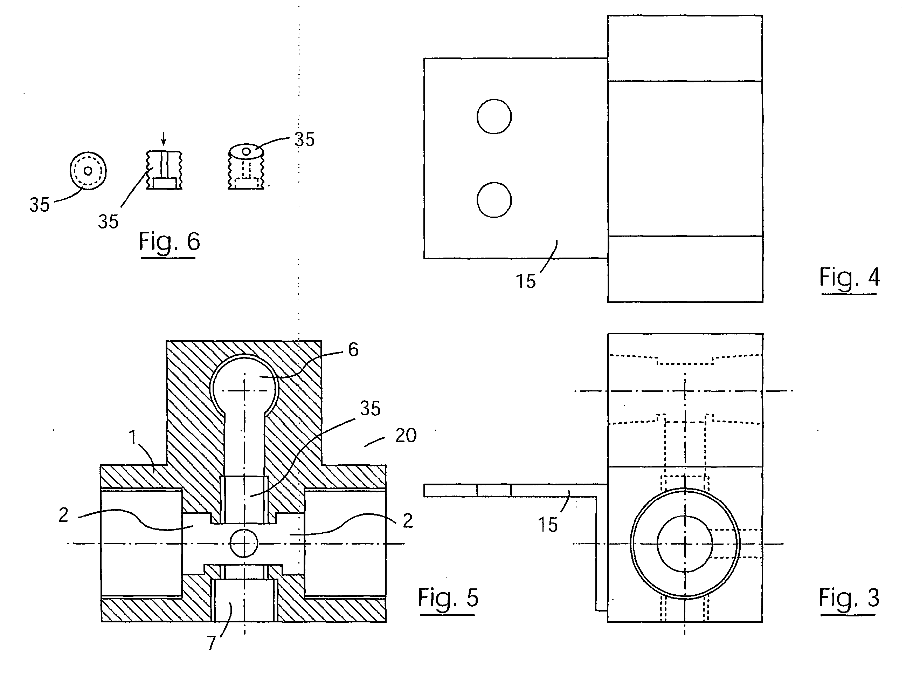

The resin is delivered through injectors 15. Each injector 15 is carried by a holder 16 which is screw threadingly engaged in a bore 17 in the mixing head 1. Each holder 16 has an inlet 18 for resin and a lubrication port 19. Pressure is adjusted by moving a setting screw covered by a cap 30. The low pressure inlet is fitted with a grub screw 35 (Fig. 6) which has an orifice of typically 1.5 mm or 3 mm through which the low pressure stream is passed into the mixing chamber 5. The mixing head 1 has an additional low pressure stream inlet port 6a which may be used, for example, for introduction of a blowing agent. The blowing agent can be added to a resin holding tank, into the resin stream or directly into the mixing head through the inlet 6a.

The acid is mixed with the phenolic resin stream in the mixing head by high pressure impingement mixing. Thus, the residence time of the acid in the mixing head is minimised and the corrosive properties of the acid are counteracted because no separate rotatable mixing element is required. Because the acid and phenolic resin are mixed in-line the mixing head is relatively light and can be mounted directly to a lay down device such as a poker. Most importantly, the distance along which the reactant mixture flows prior to lay down is minimised. Therefore the reactant mixture when laid down is at a very early stage in the foaming reaction and can readily be controlled.

The method and apparatus of the invention may be utilised in the manufacture of phenolic insulating bodies in any desired form on a batch, semi-continuous or, most importantly on a continuous basis. Thus, the invention can be applied to the manufacture of phenolic insulating panels with or without facings. The facings, when present, may be either flexible or non-flexible. There may be a flexible facing on one face and a non-flexible facing on the opposite face.

To form a phenolic insulating panel on a continuous basis a first substrate is typically conveyed along a flat bed. Liquid phenolic foam reactants are then laid down onto the first substrate and a second substrate is led continuously over the liquid insulating foam reactants. The substrates and the phenolic foam reactants are heated allowing the reactants to expand and form an insulating core between the substrates.

Various process enhancements may be adopted to improve the quality of the panel thus formed. Such enhancements are described in UK-A- 2 343 654.

### Example 1

A phenolic foam mixture is manufactured from the following:

| | parts by weight | output kg/min | mixed weight (kg) |
|---|---|---|---|
| Phenolic Resin J60/2300 | 100 | 11.10 | 1175 |
| 141b/10% PF5050 | 8 | 0.89 | 94 |
| Phencat 38 PSA | 22 | 2.45 | 258.5 |

The Resin is from Borden Chemicals. 141b is from A-Gas. PF5050 is perfluropentane from 3M. Phencat 38 is phenol sulphuric acid from Libra Chemicals.

An aerated phenolic resin stream at a temperature of 22.8°C was split into two and the streams were introduced into two separate inlets of an impingement mixing head as described above. A resin pump was run at 80Hz and the resin line pressure to the inlets was 174 bar and 169 bar respectively.

A stream of acid at ambient temperature was pumped by an acid pump run at 66Hz and delivered into the mixing head at a pressure of 3 bar.

The foam mixture thus formed was delivered through a lay down poker.

A roof and wall panel was manufactured by delivering an external profiled metal sheet to a lay-down bed. The foam mixture was laid down onto the sheet using the traversing poker.

The backing tray was then applied and the composite panel thus formed was cured. The density of the foam was 67.91 kg/m³. The panels were of good quality. Cell structure was very fine and physical properties were good. There was no evidence of streaks or stiations in the foam structure. The average compressive strength was 0.28 N/mm² and the average compressive modulus was 6.04 N/mm².

### Example 2

Example 1 was repeated with flexible aluminum foil facings using varying air injection into the mixer head as follows:

| | A | B |
|---|---|---|
| J60/2300L (Kg/hr) | 411 | 411 |
| Phencat 38 (L/hr) | 69 | 69 |
| 141b/PF5050 (90:10) (Kg/hr) | 55 | 55 |
| Resin Temperature (DegC) | 18 | 18 |
| Emulsion Temperature (DegC) | 26 | 26 |
| Resin Injector Pressures (Bar) | 170 | 170 |
| Air (cc/min) | 50 | 100 |
| Lambda Value (3 days @ 70 Deg C) | 0.0210 | 0.0185 |
| Compressive Strength (Kpa) | 77.8 | 102.6 |
| Density (Kg/m³) | 37.9 | 37.5 |

Both foams A and B had good physical characteristics.

### Example 3

Example 1 was repeated with flexible aluminum foil facings with no aeration as follows:

| | |
|---|---|
| J60/2300L(Kg/hr) | 411 |
| Phencat 38 (L/hr) | 69 |
| 141b/10%PF5050 | 55 |
| Resin Temperature (DegC) | 18 |
| Emulsion Temperature (DegC) | 26 |
| Resin Injector Pressures (Bar) | 170 |

The foam thus formed had adequate physical properties but not as good as those of Example 2.

| | |
|---|---|
| Lambda Value (3 days @ 70 Deg C) | 0.0310 |
| Compressive Strength (Kpa) | 66.7 |
| Density (Kg/m³) | 36.8 |

### Example 4

Example 2B was repeated using just one resin injector with all other parameters being the same. The resultant foam had the following properties:

| | |
|---|---|
| Lambda Value (3 days @ 70 Deg C) | 0.0234 |
| Compressive Strength (Kpa) | 89.9 |
| Density (Kg/m³) | 36.5 |

The foam had adequate physical properties but not as good as those of Example 2.

The invention is not limited to the embodiments hereinbefore described which may be varied in detail.

## Claims

1. A method for manufacturing an insulating body comprising the step of high pressure impingement mixing of a high pressure liquid phenolic resin stream at a pressure of at least 100 bar and a low pressure stream at a pressure of less than 20 bar to form a phenolic insulating foam reactant mixture.

2. A method as claimed in claim 1 wherein the low pressure stream comprises an acid stream.

3. A method as claimed in claim 1 or 2 wherein the low pressure stream comprises a blowing agent stream.

4. A method as claimed in any preceding claim wherein the low pressure stream comprises acid and blowing agent.

5. A method as claimed in any of claims 1 to 4 wherein the phenolic resin stream is at a pressure of at least 125 bar.

6. A method as claimed in any of claims 1 to 5 wherein the phenolic resin stream is at a pressure of greater than 140 bar.

7. A method as claimed in any of claims 1 to 6 wherein the phenolic resin stream is at a pressure of greater than 170 bar.

8. A method as claimed in any of claims 1 to 7 wherein the phenolic resin stream is at a pressure of from 170 to 190 bar.

9. A method as claimed in any of claims 1 to 8 wherein the low pressure stream is at a pressure of less than 10 bar.

10. A method as claimed in any of claims 1 to 9 wherein the low pressure stream is at a pressure of from 3 to 10 bar.

11. A method as claimed in any preceding claim wherein the low pressure stream is drawn into the phenolic resin stream through an orifice.

12. A method as claimed in any preceding claim including the step of splitting the phenolic resin stream into at least two streams which are directed towards one another and the low pressure stream is drawn in between the high pressure streams.

13. A method as claimed in any preceding claim comprising the step of introducing an air stream for aerating the mixture.

14. A method as claimed in claim 13 wherein the mixture is aerated by mixing with the high pressure liquid phenolic resin stream and the low pressure stream.

15. A method as claimed in claim 14 wherein the air stream is introduced during impingement mixing of the high pressure liquid phenolic resin stream and the low pressure stream.

16. A method as claimed in claim 14 or 15 wherein the air stream is at a pressure of from 3 to 8 bar.

17. A method as claimed in any preceding claim comprising the steps of: -
laying down the liquid phenolic foam reactants onto a first substrate;
applying a second substrate over the liquid foam reactants; and
heating the substrates and the reactants to allow the phenolic foam reactants to expand and form an insulating core between the substrates.

18. A method for manufacturing an insulating panel comprising the steps of:-
conveying a first substrate continuously along a flat bed;
forming a liquid phenolic foam reactant stream by a method as claimed in any of claims 1 to 17;
laying down the liquid phenolic foam reactants onto the first substrate;
leading a second substrate continuously over the liquid insulating foam reactants;
heating the substrates and the phenolic foam reactants to expand the reactants and form an insulating core between the substrates.

19. A method as claimed in claim 17 or 18 wherein the liquid phenolic foam reactants are laid onto the substrate through a lay down poker, preferably the method includes the step of moving the lay down poker relative to the substrate.

20. A method as claimed in any of claims 17 to 19 wherein at least one of the substrates is a flexible substrate, preferably at least one of the substrates is a non-flexible substrate such as a metal skin.

21. A method for manufacturing an insulating panel comprising the steps of:-
introducing a phenolic resin stream into an impingement mixing head, and simultaneously introducing a low pressure stream into the phenolic resin stream at a low pressure of less than 20 bar relative to the high pressure of at least 100 bar of the phenolic resin stream;
laying down the liquid phenolic insulating foam reactant mixture thus formed onto a substrate; and
heating the reactant mixture in an oven to allow the phenolic foam reactants to expand to form an insulating core.

22. A method as claimed in claim 21 wherein the low pressure stream comprises an acid stream.

23. A method as claimed in claim 21 or 22 wherein the low pressure stream comprises a blowing agent stream.

24. A method as claimed in any of claims 21 to 23 comprising introducing an air stream into the impingement mixing head during introduction of the phenolic resin stream and the low pressure stream.

25. Phenolic insulating foam reactant forming apparatus comprising an impingement mixing head for forming a phenolic insulating foam reactant mixture comprising at least one high pressure inlet for a phenolic resin stream at a pressure of at least 100 bar and a low pressure inlet through which a low pressure stream at less than 20 bar is drawn for impingement mixing with the phenolic stream.

26. Apparatus as claimed in claim 25 wherein the mixing head comprises at least two high pressure inlets which are directed towards one another.

27. Apparatus as claimed in claim 26 comprising two low pressure inlets.

28. Apparatus as claimed in claim 26 or 27 comprising an air inlet for introducing pressurised air into the impingement mixing head during mixing of a phenolic resin stream and a low pressure stream.

## Patentansprüche

1. Verfahren zur Herstellung eines isolierenden Körpers, das folgenden Schritt umfasst: Hochdruckaufprallmischen eines flüssigen Hochdruckphenolharzstroms, der unter einem Druck von mindestens 100 Bar steht, und eines Niederdruckstroms, der unter einem Druck von weniger als 20 Bar steht, um eine Phenolisolierschaumreaktantmischung zu bilden.

2. Verfahren nach Anspruch 1, wobei der Niederdruckstrom einen Säurestrom umfasst.

3. Verfahren nach Anspruch 1 oder 2, wobei der Niederdruckstrom einen Treibmittelstrom umfasst.

4. Verfahren nach einem der vorhergehenden Ansprüche, wobei der Niederdruckstrom Säure und ein Treibmittel umfasst.

5. Verfahren nach einem der Ansprüche 1 bis 4, wobei der Phenolharzstrom unter einem Druck von mindestens 125 Bar steht.

6. Verfahren nach einem der Ansprüche 1 bis 5, wobei der Phenolharzstrom unter einem Druck von mehr als 140 Bar steht.

7. Verfahren nach einem der Ansprüche 1 bis 6, wobei der Phenolharzstrom unter einem Druck von mehr als 170 Bar steht.

8. Verfahren nach einem der Ansprüche 1 bis 7, wobei der Phenolharzstrom unter einem Druck von 170 bis 190 Bar steht.

9. Verfahren nach einem der Ansprüche 1 bis 8, wobei der Niederdruckstrom unter einem Druck von weniger als 10 Bar steht.

10. Verfahren nach einem der Ansprüche 1 bis 9, wobei der Niederdruckstrom unter einem Druck von 3 bis 10 Bar steht.

11. Verfahren nach einem der vorhergehenden Ansprüche, wobei der Niederdruckstrom durch eine Öffnung in den Phenolharzstrom gesaugt wird.

12. Verfahren nach einem der vorhergehenden Ansprüche, das den Schritt des Aufteilens des Phenolharzstroms in mindestens zwei Ströme umfasst, die zueinander gerichtet sind, wobei der Niederdruckstrom zwischen die Hochdruckströme gesaugt wird.

13. Verfahren nach einem der vorhergehenden Ansprüche, das den Schritt des Einleitens eines Luftstroms zur Durchlüftung der Mischung umfasst.

14. Verfahren nach Anspruch 13, wobei die Mischung durchlüftet wird, indem sie mit dem flüssigen Hochdruckphenolharzstrom und dem Niederdruckstrom gemischt wird.

15. Verfahren nach Anspruch 14, wobei der Luftstrom während des Aufprallmischens des flüssigen Hochdruckphenolharzstroms und des Niederdruckstroms eingeleitet wird.

16. Verfahren nach Anspruch 14 oder 15, wobei der Luftstrom unter einem Druck von 3 bis 8 Bar steht.

17. Verfahren nach einem der vorhergehenden Ansprüche, das folgende Schritte umfasst:
Ablegen der flüssigen Phenolschaumreaktanten auf einem ersten Substrat;
Auftragen eines zweiten Substrats über den flüssigen Schaumreaktanten; und
Erwärmen der Substrate und der Reaktanten, um den Phenolschaumreaktanten zu ermöglichen, sich auszudehnen und einen isolierenden Kern zwischen den Substraten zu bilden.

18. Verfahren zur Herstellung einer isolierenden Platte, das folgende Schritte umfasst:
Kontinuierliches Befördern eines ersten Substrats entlang eines Flachbetts;
Bilden eines flüssigen Phenolschaumreaktantstroms durch ein Verfahren nach einem der Ansprüche 1 bis 17;
Ablegen der flüssigen Phenolschaumreaktanten auf dem ersten Substrat;
Kontinuierliches Führen eines zweiten Substrats über die flüssigen isolierenden Schaumreaktanten;
Erwärmen der Substrate und der Phenolschaumreaktanten, so dass sich die Reaktanten ausdehnen und ein isolierender Kern zwischen den Substraten gebildet wird.

19. Verfahren nach Anspruch 17 oder 18, wobei die flüssigen Phenolschaumreaktanten durch eine Ablegestochervorrichtung auf dem Substrat abgelegt werden, wobei das Verfahren vorzugsweise den Schritt des Bewegens der Ablegestochervorrichtung im Verhältnis zum Substrat umfasst.

20. Verfahren nach einem der Ansprüche 17 bis 19, wobei mindestens eines der Substrate ein elastisches Substrat ist und vorzugsweise mindestens eines der Substrate ein nicht-elastisches Substrat, wie beispielsweise eine Metallhaut, ist.

21. Verfahren zur Herstellung einer isolierenden Platte, das folgende Schritte umfasst:
Einleiten eines Phenolharzstroms in einen Aufprallmischkopf und gleichzeitiges Einleiten eines Niederdruckstroms in den Phenolharzstrom bei einem niedrigen Druck von weniger als 20 Bar im Verhältnis zu dem hohen Druck von mindestens 100 Bar des Phenolharzstroms;
Ablegen der somit gebildeten flüssigen Phenolisolierschaumreaktantmischung auf einem Substrat; und
Erwärmen der Reaktantmischung in einem Ofen, um den Phenolschaumreaktanten zu ermöglichen, sich auszudehnen, um einen isolierenden Kern zu bilden.

22. Verfahren nach Anspruch 21, wobei der Niederdruckstrom einen Säurestrom umfasst.

23. Verfahren nach Anspruch 21 oder 22, wobei der Niederdruckstrom einen Treibmittelstrom umfasst.

24. Verfahren nach einem der Ansprüche 21 bis 23, das Folgendes umfasst: Einleiten eines Luftstroms in den Aufprallmischkopf während des Einleitens des Phenolharzstroms und des Niederdruckstroms.

25. Vorrichtung zur Bildung eines Phenolisolierschaumreaktanten, die einen Aufprallmischkopf zum Bilden einer Phenolisolierschaumreaktantmischung umfasst, wobei der Aufprallmischkopf Folgendes umfasst: mindestens einen Hochdruckeinlass für einen Phenolharzstrom, der unter einem Druck von mindestens 100 Bar steht, sowie einen Niederdruckeinlass, durch den ein Niederdruckstrom mit weniger als 20 Bar zum Aufprallmischen mit dem Phenolstrom gesaugt wird.

26. Vorrichtung nach Anspruch 25, wobei der Mischkopf mindestens zwei Hochdruckeinlässe umfasst, die zueinander gerichtet sind.

27. Vorrichtung nach Anspruch 26, die zwei Niederdruckeinlässe umfasst.

28. Vorrichtung nach Anspruch 26 oder 27, die einen Lufteinlass zum Einleiten von Druckluft in den Aufprallmischkopf während des Mischens eines Phenolharzstroms und eines Niederdruckstroms umfasst.

## Revendications

1. Procédé permettant de fabriquer un corps isolant comportant l'étape consistant à mélanger par inertie à haute pression un jet de résine phénolique liquide haute pression à une pression d'au moins 100 bars et un jet basse pression à une pression de moins de 20 bars afin de former un mélange de réactants de type mousse isolante phénolique.

2. Procédé selon la revendication 1, dans lequel le jet basse pression comporte un jet d'acide.

3. Procédé selon la revendication 1 ou la revendication 2, dans lequel le jet basse pression comporte un jet d'agent gonflant.

4. Procédé selon l'une quelconque des revendications précédentes, dans lequel le jet basse pression comporte agent gonflant et acide.

5. Procédé selon l'une quelconque des revendications 1 à 4, dans lequel le jet de résine phénolique est à une pression d'au moins 125 bars.

6. Procédé selon l'une quelconque des revendications 1 à 5, dans lequel le jet de résine phénolique est à une pression de plus de 140 bars.

7. Procédé selon l'une quelconque des revendications 1 à 6, dans lequel le jet de résine phénolique est à une pression de plus de 170 bars.

8. Procédé selon l'une quelconque des revendications 1 à 7, dans lequel le jet de résine phénolique est à une pression de 170 à 190 bars.

9. Procédé selon l'une quelconque des revendications 1 à 8, dans lequel le jet basse pression est à une pression de moins de 10 bars.

10. Procédé selon l'une quelconque des revendications 1 à 9, dans lequel le jet basse pression est à une pression de 3 à 10 bars.

11. Procédé selon l'une quelconque des revendications précédentes, dans lequel le jet basse pression est aspiré dans le jet de résine phénolique par le biais d'un orifice.

12. Procédé selon l'une quelconque des revendications précédentes, comprenant l'étape consistant à diviser le jet de résine phénolique en au moins deux jets qui sont dirigés l'un vers l'autre et le jet basse pression est aspiré entre les jets haute pression.

13. Procédé selon l'une quelconque des revendications précédentes, comportant l'étape consistant à introduire un jet d'air destiné à aérer le mélange.

14. Procédé selon la revendication 13, dans lequel le mélange est aéré par mélange avec le jet de résine phénolique liquide haute pression et le jet basse pression.

15. Procédé selon la revendication 14, dans lequel le jet d'air est introduit au cours du mélange par inertie du jet de résine phénolique liquide haute pression et du jet basse pression.

16. Procédé selon la revendication 14 ou la revendication 15, dans lequel le jet d'air est à une pression de 3 à 8 bars.

17. Procédé selon l'une quelconque des revendications précédentes, comportant les étapes consistant à :
poser les réactants de type mousse phénolique liquide sur un premier support ;
appliquer un deuxième support sur les réactants de type mousse liquide ; et
chauffer les supports et les réactants pour permettre aux réactants de type mousse phénolique de se dilater et de former un noyau isolant entre les supports.

18. Procédé permettant de fabriquer un panneau isolant comportant les étapes consistant à:
transporter un premier support de manière continue le long d'un banc plat ;
former un jet de réactants de type mousse phénolique liquide par un procédé selon l'une quelconque des revendications 1 à 17 ;
poser les réactants de type mousse phénolique liquide sur le premier support ;
faire avancer un deuxième support de manière continue sur les réactants de type mousse isolante liquide ;
chauffer les supports et les réactants de type mousse phénolique afin de faire dilater les réactants et de former un noyau isolant entre les supports.

19. Procédé selon la revendication 17 ou la revendication 18, dans lequel les réactants de type mousse phénolique liquide sont posés sur le support par le biais d'un pic de pose, de préférence le procédé comprend l'étape consistant à déplacer le pic de pose par rapport au support.

20. Procédé selon l'une quelconque des revendications 17 à 19, dans lequel au moins un des supports est un support flexible, de préférence au moins un des supports est un support non flexible tel qu'un recouvrement métallique.

21. Procédé permettant de fabriquer un panneau isolant comportant les étapes consistant à:
introduire un jet de résine phénolique dans une tête de mélange par inertie, et de manière simultanée introduire un jet basse pression dans le jet de résine phénolique à une basse pression de moins de 20 bars par rapport à la haute pression d'au moins 100 bars du jet de résine phénolique ;
poser le mélange de réactants de type mousse isolante phénolique liquide ainsi formé sur un support ; et
chauffer le mélange de réactants dans un four pour permettre aux réactants de type mousse phénolique de se dilater afin de former un noyau isolant.

22. Procédé selon la revendication 21, dans lequel le jet basse pression comporte un jet d'acide.

23. Procédé selon la revendication 21 ou la revendication 22, dans lequel le jet basse pression comporte un jet d'agent gonflant.

24. Procédé selon l'une quelconque des revendications 21 à 23, comportant l'introduction d'un jet d'air dans la tête de mélange par inertie au cours de l'introduction du jet de résine phénolique et du jet basse pression.

25. Appareil permettant de réaliser des réactants de type mousse isolante phénolique comportant une tête de mélange par inertie pour réaliser un mélange de réactants de type mousse isolante phénolique comportant au moins une entrée haute pression pour un jet de résine phénolique à une pression d'au moins 100 bars et une entrée basse pression par le biais de laquelle un jet basse pression à moins de 20 bars est aspiré pour mélange par inertie avec le jet phénolique.

26. Appareil selon la revendication 25, dans lequel la tête de mélange comporte au moins deux entrées haute pression qui sont dirigées l'une vers l'autre.

27. Appareil selon la revendication 26, comportant deux entrées basse pression.

28. Appareil selon la revendication 26 ou la revendication 27, comportant une entrée d'air destinée à introduire de l'air sous pression dans la tête de mélange par inertie au cours du mélange d'un jet de résine phénolique et d'un jet basse pression.
